# EUROPÄISCHE PATENTANMELDUNG

(11) **EP 4 360 869 A1**
(43) Veröffentlichungstag der Anmeldung: **01.05.2024**
(21) Anmeldenummer: 22203351.6
(22) Anmeldetag: 24.10.2022
(51) Int. Cl.: B30B 9/30, B30B 15/30, B65G 67/04, B65G 67/30, B65F 3/04

(54) **BALLENPRESSE MIT KULISSENGEFÜHRTER HUB-/KIPPEINRICHTUNG**

(71) Anmelder: HSM GmbH + Co. KG, 88699 Frickingen (DE)
(72) Erfinder: Schautzgy, Maximilian, 88697 Bermatingen (DE); Gotterbarm, Roderich, 88697 Bermatingen (DE)
(74) Vertreter: Weickmann & Weickmann PartmbB

(57) **Zusammenfassung**

Ballenpressen sind aus dem Stand der Technik zahlreich bekannt und dienen der Verpressung von Materialien wie Plastik oder Pappe zu Ballen, welche dann der Wiederverwertung zugeführt werden können. Da solche Ballenpressen in aller Regel in beengten Räumen in Supermärkten aufgestellt werden und möglichst wenig Raum einnehmen sollen, besteht in der Konstruktion regelmäßig das ziel einer kompakten Bauform. Die vorliegende Erfindung löst dies über eine kulissengeführte Hub-/Kippeinrichtung mit einem Halteelement, welches in einer Endlage der Kulissenführung eine Drehaufnahme aufweist und mithilfe eines Hubzylinders betätigt werden kann.

## Beschreibung

Die vorliegende Erfindung betrifft eine Ballenpresse mit einem Pressengehäuse, welches einen Einfüllraum zur Aufnahme von zu verpressendem Material und einen Pressraum zum Verpressen des Materials mithilfe eines horizontal verfahrbaren Pressstempels umgibt und eine Hub-/Kippeinrichtung zur Entleerung eines Sammelbehälters in einen mit dem Einfüllraum verbundenen Einfülltrichter aufweist.

Derartige Ballenpressen sind aus dem Stand der Technik bereits zahlreich bekannt. So nutzt etwa die DE 10 2012 105 461 A1 einen seitlichen Hebearm, um einen mit einem Sammelbehälter in Form eines Abschachtelwagens anzuheben und in einem Bewegungsbogen über einen Einfülltrichter zu heben und dort aufgrund der Schwerkraft und der durch den Bewegungsbogen eingenommenen Überkopfposition zu entleeren.

Der bevorzugte Einsatzbereich solcher Ballenpressen sind die Lagerflächen in Supermärkten und Lebensmitteldiscountern, wo sie dazu eingesetzt werden die in den Abschachtelwagen beim Auspacken der Waren gesammelten Verpackungen, idealerweise sortenrein, zu verpressen und in Ballen zusammenzufassen. Diese können dann der Wiederverwertung zugeführt werden.

Üblicherweise wird mittels einer seitlich an der Außenseite des Ballenpressengehäuses verschwenkbar gelagerten Hub-/Kippeinrichtung ein solcher Sammelbehälter aus einer Koppelposition, in welcher der Sammelbehälter mit der Hub-/Kippeinrichtung verbunden wird, in eine Entleerungsposition oberhalb des Einfülltrichters überführt. Das lose Abfallmaterial fällt in der Entleerungsposition in Richtung der auf der Oberseite des Pressengehäuses vorgesehenen Einfüllöffnung, denn die offene Stirnseite des Behälters steht dort fluchtend oberhalb zu der Einfüllöffnung, sodass das lose Abfallmaterial aufgrund der vorherrschenden Schwerkraft aus dem Sammelbehälter durch die Einfüllöffnung und folglich in den Pressraum der Ballenpresse verbracht wird. Nach dem Einfüllvorgang beginnt der eigentliche Press- oder Verdichtungsvorgang, wenn der Pressstempel in den somit befüllten Pressraum eintaucht und zur Verdichtung des dort eingefüllten Materials eine Presskraft ausübt. Das Befüllen des Pressraums kann mit mehreren Behältern erfolgen, denn das Volumen des Pressraums kann zunächst vollständig befüllt und der Verdichtungsvorgang mehrfach wiederholt werden, bis die gewünschte Ballengröße verdichteten Materials erreicht ist.

Bei einer weiteren bekannten Ausführung gemäß der DE 10 2009 040 507 A1 ist bei der dortigen Ballenpresse als nachteilig anzusehen, dass die Hub-/Kippeinrichtung entlang der Längsseite des Ballenpressengehäuses vorgesehen ist. Durch die seitlich auftragende Hub-/Kippeinrichtung vergrößert sich die Standfläche der Ballenpresse, insbesondere in Richtung eines möglichen Durchgangsbereichs, der seitlich neben der Ballenpresse verläuft.

Demgegenüber optimiert die erstgenannte DE 10 2012 105 461 A1 die Standfläche der Ballenpresse, wodurch sich die Länge der Ballenpresse zwar vergrößert, jedoch die Seitenbereiche nicht mehr durch die Hub-/Kippeinheit blockiert sind.

Gleichwohl ist bei dieser Anordnung weiterhin nachteilig, dass die Ballenpresse eine groß bemessene Standfläche benötigt. Insbesondere in Lagerhallen von Supermärkten und Discountern sind solche Platzbedürfnisse jedoch zu minimieren, da in diesen Lagerhallen der Raum knapp bemessen und teuer ist. Daher werden Ballenpressen oftmals in Seiten- oder Eckbereichen der Lagerhalle aufgestellt.

Vor diesem Hintergrund liegt der vorliegenden Erfindung die Aufgabe zu Grunde, eine Ballenpresse zu schaffen, welche unter Beibehaltung der üblichen Kapazitäten eine möglichst kompakte Bauweise aufweist und möglichst geringe Raumanforderungen stellt.

Gelöst wird diese Aufgabe durch eine Ballenpresse gemäß den Merkmalen des unabhängigen Anspruchs 1. Sinnvolle Weiterentwicklungen können den sich anschließenden abhängigen Ansprüchen entnommen werden.

Vorgesehen ist hierfür eine Ballenpresse mit einem Pressengehäuse, welches einen Einfüllraum zur Aufnahme von zu verpressendem Material und einen Pressraum zum Verpressen des Materials mithilfe eines horizontal verfahrbaren Pressstempels umgibt und eine Hub-/Kippeinrichtung zur Entleerung eines Sammelbehälters in einen mit dem Einfüllraum verbundenen Einfülltrichter aufweist. Eine solche Ballenpresse ist erfindungsgemäß dadurch gekennzeichnet, dass die Hub-/Kippeinrichtung ein Halteelement umfasst, welches Mittel zur horizontalen Festlegung und Mittel zur vertikalen Festlegung des Sammelbehälters, sowie wenigstens einen mit dem Halteelement verbundenen Kulissenstein aufweist, welcher entlang wenigstens einer dem Pressengehäuse zugeordneten Kulisse zwangsgeführt ist, wobei an einer oberen Endlage der wenigstens einen Kulisse eine Drehaufnahme gebildet ist.

Eine solche Anordnung erlaubt es, den erforderlichen Sammelbehälter unmittelbar am Heck der Ballenpresse an die Hub-/Kippeinrichtung anzukoppeln, deren Halteelement praktisch auf der Höhe der rückwärtigen Seitenwand des Pressengehäuses angeordnet ist. Das Halteelement mit dem Sammelbehälter kann dadurch entlang der Kulisse bewegt werden und gelangt in einer Endlage am Ende der Kulisse in die Drehaufnahme, welche verhindert, dass das Halteelement beim weiteren Anheben wieder entlang der Kulissenführung nach unten gleitet. Durch diesen Aufbau kann eine sehr kompakte Bauform erreicht werden, welche weder seitlich durch das Verstellen von Laufwegen mit einer seitlichen Hub-/Kippeinrichtung aufträgt, noch auf massive Hebearme zurückgreifen muss. Auch im Heckbereich kann hierdurch auf die Verwendung von raumgreifenden Konstruktionen verzichtet werden, da zum Anheben des Sammelbehälters lediglich ein Hubelement erforderlich ist, das das Halteelement entlang der Kulissenführung verschiebt und an deren Ende um die Drehaufnahme herum über Kopf verschwenkt.

In konkreter Ausgestaltung kann das Halteelement demgemäß mithilfe eines Hubelements, vorzugsweise eines Hydraulikzylinders, welcher zwischen dem Halteelement und dem Pressengehäuse angeordnet ist, entlang der Kulisse verschiebbar sein. Die vollständige zum Heben und Kippen benötigte Vorrichtung kann damit zwischen Halteelement und Pressengehäuse aufgenommen werden. Zudem stellt die Verwendung lediglich eines Hubzylinders im Vergleich zu der Konstruktion eines umfangreichen Hebearms wie im Stand der Technik eine erhebliche Einsparung an Material und damit Kosten dar und erlaubt einen energieeffizienteren Betrieb.

Bevorzugtermaßen kann hierbei weiter vorgesehen sein, dass das Halteelement mithilfe des Hubelements in der Endlage des Kulissensteins in der Drehaufnahme schwenkbar ist. So wird das Hubelement, bevorzugt der Hydraulikzylinder zunächst beim Ausrücken das Halteelement entlang der Kulisse verschieben, bis der Kulissenstein in die endständige Drehaufnahme eingerückt ist. Durch die weitere Betätigung des Hubelements verschwenkt das Halteelement dann mit dem Sammelbehälter um eine durch die Drehaufnahme horizontal verlaufende Drehachse und kippt diesen in den Einfülltrichter.

In vorteilhafter Ausgestaltung kann vorgesehen sein, dass die Drehaufnahme als Gehäuse zur Aufnahme eines mit dem Kulissenstein verbundenen Führungselements gebildet ist, wobei der Kulissenstein in seiner Endlage in dem Inneren des Gehäuses aufgenommen ist. Ein solches Führungselement kann konkret eine Führungskontur aufweisen, die innerhalb der Drehaufnahme geführt ist. Bei einer Ausführung als bogenförmiges Element und durch das Vorsehen eines Sperrelements in der Drehaufnahme, um welches das bogenförmige Element während einer Drehbewegung herumgeführt wird, kann ein solches Sperrelement verhindern, dass der Kulissenstein in einer Überkopfposition des Sammelbehälters die Drehaufnahme verlassen und durch die Kulisse wieder abwärts rutschen könnte.

Konkret kann zudem vorgesehen sein, dass die Kulisse einen senkrechten Kulissenabschnitt und einen abgewinkelten Kulissenabschnitt aufweist, wobei der abgewinkelte Kulissenabschnitt in die Endlage des Kulissensteins mündet. Eine solche Gestaltung der Kulisse kommt dem Bewegungsablauf und den Kraftverhältnissen des Hubelements, vorzugsweise des Hydraulikzylinders, entgegen. So kann zunächst in einer von der Kulisse vorgegebenen senkrechten Aufwärtsbewegung auch das in seiner Ausgangsstellung weitgehend aufrecht, vorzugsweise um 5-10° geneigt, stehende Hubelement in einer effektiven Kraftrichtung ausrücken. Auf dem Weg zur Endlage kommt bei dem Übergang von dem senkrechten Kulissenabschnitt in den abgewinkelten Kulissenabschnitt eine deutliche seitliche Komponente hinzu, so dass das Hubelement sich schrägstellt. Erreicht der Kulissenstein die Drehaufnahme, so greift das Hubelement in einem deutlichen Winkel zur Senkrechten unterhalb der durch die Drehaufnahme verlaufenden Drehachse an und kann dadurch eine Verschwenkung des Halteelements mit dem Sammelwagen um die Drehachse bewirken.

Ergänzend kann vorgesehen sein, dass das Halteelement wenigstens eine Stütze, vorzugsweise zwei parallele Stützen, mit einem endständigen Rollelement aufweist, wobei das Rollelement entlang einer Führungskontur des Pressengehäuses verfahrbar ist und die Führungskontur in Abschnitte unterteilt ist, welche mit den Abschnitten der Kulisse korrespondieren und parallel zu diesen verlaufen. Hierdurch kann das Halteelement sich zusätzlich an den Stützen und den daran angebrachten Rollelementen bei der Fahrt durch die Kulisse so abstützen, dass der Sammelbehälter zunächst gerade aufwärts und dann in einer aufwärts gerichteten Parallelverschiebung bewegt, ohne bereits hier in eine Kipplage zu geraten. Selbst wenn der Sammelbehälter sehr voll sein sollte, wird auf diese Weise nichts aus ihm herausfallen, solange er sich nicht über dem Einfülltrichter befindet.

Bevorzugtermaßen kann dem Halteelement als Mittel zur vertikalen Festlegung des Sammelbehälters wenigstens ein, vorzugsweise quaderförmiger, Vorsprung zum Eingriff in eine seitliche U-Schiene des Sammelbehälters angeformt oder zugeordnet sein. Dies erlaubt es dem Halteelement, den Sammelbehälter bei der Aufwärtsbewegung sicher mitzunehmen. Ergänzend kann dem Halteelement als Mittel zur horizontalen Festlegung des Sammelbehälters einerseits wenigstens ein dreiseitig geschlossener Einschub und andererseits ein dem Einschub gegenüberliegendes, lösbares Verriegelungselement zugeordnet sein. Hierbei ist es nicht notwendig, dass die drei Seiten des Einschubs in einer Höhenebene vorgesehen sind, es ist lediglich erforderlich, dass der Sammelbehälter in keine in der Koppelposition horizontalen Richtung ausweichen kann, wenn er durch das Verschließen des Verriegelungselements angekoppelt ist. Mit dem Einschieben des Sammelbehälters mit einem Rahmenteil in den Einschub und dem Herandrücken an das Verriegelungselement, sowie dem nachfolgenden Verriegeln desselben ist der Sammelbehälter dann in alle Richtungen festgelegt und kann sicher angehoben und gekippt werden.

Es hat sich als vorteilhaft herausgestellt, wenn das Verriegelungselement um eine Drehachse verschwenkbar ist, wobei dem Verriegelungselement ein kulissengeführter Riegelstift zugeordnet ist, welcher mithilfe eines Aktuators von einer Verschlussposition in eine Öffnungsposition beweglich ist. Auf diese Weise kann das Verriegelungselement in seiner Verschlussposition ebenfalls einen Rahmenteil des Sammelbehälters umgreifen. Wird am Ende des Vorgangs der Aktuator, vorzugsweise ein Hubmagnet, betätigt, so kann dadurch das Verriegelungselement wieder geöffnet werden. Da das Öffnen auf diese Weise durch ein elektrisches Signal bewirkt werden muss, kann ein versehentliches Betätigen des Verriegelungselements zur Unzeit ausgeschlossen werden. Während des Betriebs kann der Aktuator strom los geschaltet und damit in einen sicheren Betriebszustand gebracht werden.

Mit besonderem Vorteil kann zudem das Verriegelungselement durch Verschwenken um die Drehachse verriegelbar und der Riegelstift im Zuge der Verriegelung aufgrund einer Federvorspannung aus der Öffnungsposition in die Verschlussposition beweglich sein. Hierdurch ist es möglich die Verriegelung durch das bloße Einschieben des Sammelbehälters in die Koppelposition zu verriegeln. Da das Verriegeln mit zu dem Verriegelungselement passenden Strukturen am Sammelbehälter bewirkt wird, ergibt sich hierdurch auch hinsichtlich des Sammelbehälters eine Anwesenheitskontrolle. Durch einen geeigneten Sensor im Bereich des Aktuators kann zudem die Position des Riegelstifts erfasst werden, etwa aufgrund einer Anordnung von Permanentmagneten an dem Riegelstift. Auch hierdurch kann die Sicherheit der Vorrichtung weiter verbessert werden.

Weiter kann vorgesehen sein, dass das Pressengehäuse in dem Einfülltrichter eine Fördervorrichtung, vorzugsweise ein Förderband, aufweist. Da die beschriebene Hub-/Kippeinrichtung um die Drehachse durch die Drehaufnahme am oberen Ende der Kulisse geschwenkt wird, ergibt es sich, dass der Sammelbehälter weit vorne im Einfülltrichter entleert wird. Daher kann an dieser Stelle die Fördervorrichtung dafür sorgen, dass das eingekippte Material weiter nach hinten, etwa über einen Pressstempel hinweg, welcher in seiner Ausgangsstellung im Heck des Pressengehäuses und damit der Hub-/Kippeinrichtung zugewandt angeordnet ist, in den Einfüllraum beziehungsweise in den Pressraum befördert werden kann.

Bevorzugtermaßen kann der Pressstempel in dem Pressengehäuse mithilfe von seitlich am Pressengehäuse ziehend angeordneten Presszylindern beweglich sein. Hierdurch muss der Pressstempel nicht von einem drückenden Zylinder betätigt werden, der ansonsten ebenfalls in dem Pressengehäuse Platz finden müsste und die Länge des Pressengehäuses weiter vergrößern würde.

In bevorzugter Ausgestaltung kann schließlich vorgesehen sein, dass eine Verpressung mithilfe des Pressstempels gegen eine Tür des Pressengehäuses erfolgt, welche vorzugsweise der Hub-/Kippeinrichtung gegenüberliegt. Hierdurch ist es möglich, sehr kompakte Ballen auf möglichst kleinem Raum zu formen. Insbesondere gegenüber der alternativen Bauform als Kanalballenpresse kann hierdurch Standfläche bei der Ballenpresse eingespart werden.

Die vorstehend beschriebene Erfindung wird im Folgenden anhand eines Ausführungsbeispiels näher erläutert.

Es zeigen
- Figur 1: eine Ballenpresse mit einer kulissengeführten Hub-/Kippeinrichtung in perspektivischer Darstellung,
- Figur 2: die freigestellte Hub-/Kippeinrichtung aus der Ballen-presse gemäß Figur 1 in perspektivischer Darstel-lung,
- Figur 3: ein Detail des Verriegelungselements in perspektivi-scher Darstellung,
- Figur 4: die Ballenpresse gemäß Figur 1 mit angekoppeltem Sammelbehälter in dessen Koppelposition in seitli-cher Draufsicht,
- Figur 5: ein Detail der Ballenpresse gemäß Figur 4 in seitli-cher Schnittdarstellung, sowie
- Figur 6: die Ballenpresse gemäß Figur 4 mit angekoppeltem Sammelbehälter in dessen Entleerungsposition in seitlicher Draufsicht.

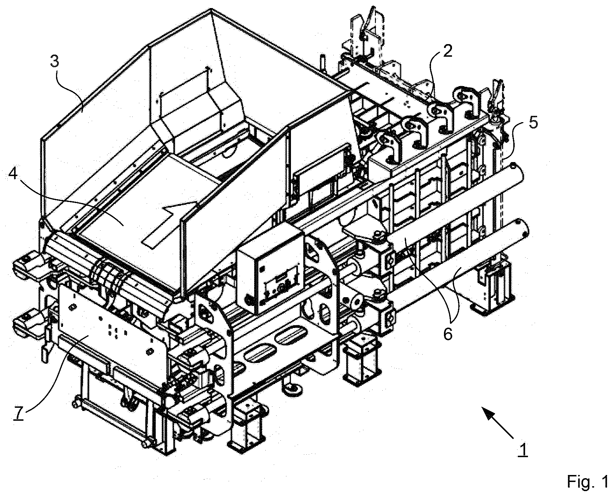

Figur 1 zeigt eine Ballenpresse 1 mit einer Heckbeschickung, welche über eine Hub-/Kippeinrichtung 7 mit Kulissenführung erfolgt. Ein Pressraum wird dabei von einem Pressengehäuse umgeben, in dem ein Pressstempel horizontal verfährt und dabei von außenliegenden Presszylindern 6 ziehend betätigt wird. Die Befüllung des Pressraums erfolgt über einen Einfülltrichter 3, in welchem ein Förderband 4 angeordnet ist. An der Hub-/Kippeinrichtung 7 kann ein Sammelbehälter 8 angekoppelt werden, welcher von der Hub-/Kippeinrichtung 7 angehoben und um eine Drehachse geschwenkt wird. Das darin aufgenommene Material fällt hierdurch auf das Förderband 4 und wird innerhalb des Einfülltrichters 3 in den Einfüllraum und von dort in den Pressraum verbracht. Die Entnahme verpresster und umreifter Ballen erfolgt über eine Tür 5 an der Frontseite des Pressengehäuses 2.

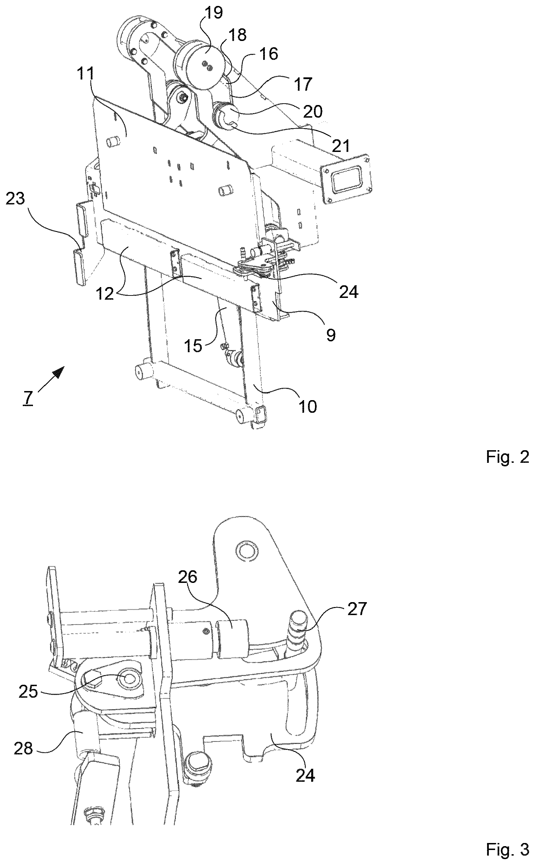

Figur 2 zeigt die isolierte Hub-/Kippeinrichtung 7. Diese umfasst zunächst im Wesentlichen ein Halteelement 9, welches mit dem Sammelbehälter 8 mechanisch verbunden wird. Hierzu wird der Sammelbehälter 8 an die Hub-/Kippeinrichtung von leicht schräg hinten herangefahren, zunächst an einer Seite mit einem Einschub 23 in diesen eingeschoben und dann in einem kurzen Bogen an das Halteelement 9 angedrückt. Hierbei geraten Vorsprünge 12 in eine horizontale, U-förmige Schiene an einer Seite des Sammelbehälters 8 und sorgen für einen Halt beim Anheben des Halteelements 9. Beim Herandrücken des Sammelbehälters 8 auch mit der dem Einschub 23 gegenüberliegenden Seite wird im letzten Moment ein Verriegelungselement 24 ausgelöst, welches den Sammelbehälter 8 mit dem Halteelement 9 verbindet. Zu Abstützung des Sammelbehälters 8 ist oberhalb des Halteelements 9 eine Stützplatte 11 und unterhalb des Halteelements 9 ein Stützrahmen 10 vorgesehen. Gummipuffer sorgen für eine klapper- und spielfreie Festlegung an der Hub-/Kippeinrichtung 7. Nach der Ankopplung des Sammelbehälters 8 an dem Halteelement 9 kann die Hub-/Kippeinrichtung 7 betätigt werden. Hierzu wird diese mit einem Hydraulikzylinder 15 angehoben. Da das Halteelement 9 mit zwei Kulissensteinen 20 in einer an dem Pressegehäuse 2 befestigten Kulisse 16 zwangsgeführt ist, folgt das Halteelement 9 der von der entsprechend paarweise ausgestalteten Kulisse 16 vorgegebenen Richtung. Diese weist zunächst einen senkrechten Kulissenabschnitt 17 auf, dann einen gegenüber dem senkrechten Kulissenabschnitt 17 abgewinkelten Kulissenabschnitt 18. Das Halteelement 9 führt hierdurch zunächst eine senkrechte Bewegung aus, dann eine Parallelverschiebung schräg nach oben, weg von dem Pressengehäuse 2.

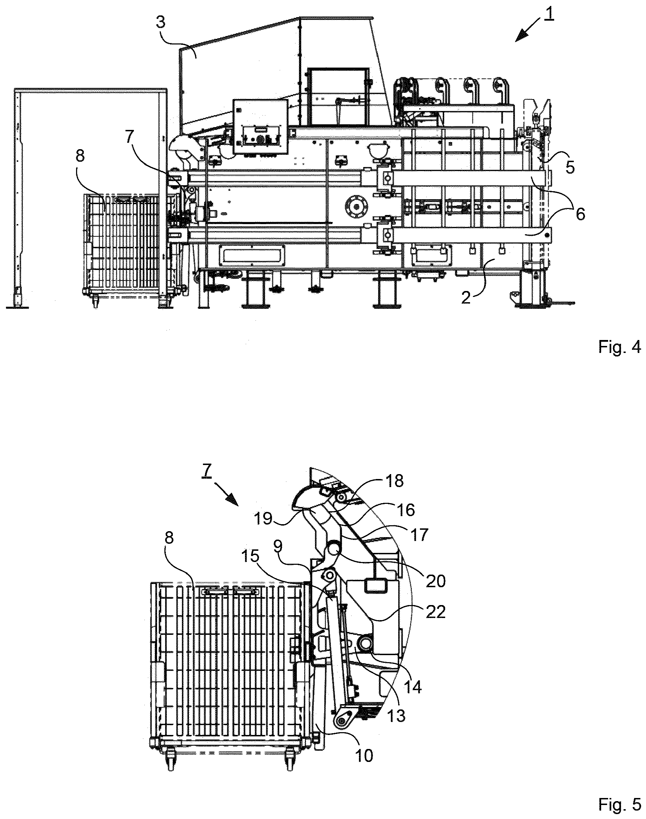

Mithilfe von zwei in Figur 5 gezeigten Stützen 13 mit endständigen Rollelementen 14 stützt sich das Halteelement 9 während der Aufwärtsbewegung an mit der Kulisse 9 korrespondierenden Führungskonturen 22 des Pressengehäuses 2 ab, so dass das Halteelement 9 und damit der Sammelbehälter 8 stets aufrecht gehalten bleibt, bis eine Endlage der Kulissensteine 20 in jeweils einer endständigen Drehaufnahme 19 erreicht ist.

An dem Kulissenstein 20 ist in der Figur 2 ein Führungselement 21 ausgebildet, welches halbkreisförmig gestaltet ist. Rückt der Kulissenstein 20 am Ende der Kulisse 16 in die Drehaufnahme 19 ein, so befindet sich in der Drehaufnahme 19 ein mittiges Sperrelement, welches während der dann folgenden Drehung des Halteelements 9 um eine Drehachse der Drehaufnahme 19 von dem halbkreisförmigen Führungselement 21 umrundet wird, bis sich das Führungselement 21 auf dem Sperrelement abstützt. Ein Herausgleiten des Kulissensteins 20 aus der Drehaufnahme 19 ist dadurch verhindert.

Figur 3 zeigt das Verriegelungselement 24, welches gegenüber dem Einschub 23 für den Sammelbehälter 8 an dem Halteelement 9 angeordnet ist. Das Verriegelungselement 24 selbst ist eine um eine Drehachse 25 schwenkbare Platte, die ihrerseits eine Aufnahme ausbildet, welche mit dem Rahmen des Sammelbehälters 8 zusammenwirkt um diesen an dem Halteelement 9 zu fixieren. Über eine Feder 28 ist das Verriegelungselement 24 um die Drehachse 25 gespannt und möchte dadurch in eine Offenstellung ausweichen. Diese Offenstellung kann allerdings nur erreicht werden, wenn sich ein Riegelstift 27 ebenfalls in einer Öffnungsposition befindet, wie in Figur 3 dargestellt. In der Öffnungsposition wird das Verriegelungselement 24 aufgrund der Rückstellkraft der Feder 28 so ausweichen, dass die Aufnahme etwas dem Sammelbehälter 8 zugewandt wird und dessen Rahmen leicht aufnehmen kann. Wird der Sammelbehälter angekoppelt, so wird nach einem Einschieben der fernen Ecke in den Einschub 23 zuletzt die dem Einschub 23 gegenüberliegende Ecke an das Halteelement 9 angedrückt, wobei die dem Verriegelungselement 24 zugewandte Ecke in die Aufnahme gerät. Durch das Herandrücken des Sammelbehälters 8 wird das Verriegelungselement 24 in die in Figur 3 gezeigte Position gebracht, in der dann in einem nächsten Schritt der Riegelstift 27 aufgrund der Rückstellkraft einer weiteren, im Bild verdeckten Feder auf einen Aktuator 26 zu verstellt wird. Da sich der Riegelstift 27 innerhalb einer L-förmigen Kulisse des Verriegelungselements 24 befindet, ist ein Verschwenken des Verriegelungselements 24 in dessen Öffnungsposition nun verhindert. Der Sammelbehälter 8 ist damit fixiert. Da der Sammelbehälter 8 das Verriegelungselement 24 betätigt, ist damit auch eine Anwesenheitskontrolle bewirkt. Der Hub-/Kippvorgang kann nun sicher durchgeführt werden. Nach seinem Abschluss kann der Aktuator 26 elektrisch betätigt werden, um den Riegelstift 27 wieder in die in Figur 3 gezeigte Position zu verfahren, wodurch das Verriegelungselement 24 wieder aufgrund der Rückstellkraft der Feder 28 um die Drehachse 25 in die Öffnungsposition verschwenkt und den Sammelbehälter 8 etwas von dem Halteelement 9 wegdrückt.

Figur 4 zeigt nunmehr den Moment der Ankopplung des Sammelbehälters 8 in einer seitlichen Darstellung. Durch ein Herandrücken des Sammelbehälters 8 an die Hub-/Kippeinrichtung 7 wird dieser nach Auslösen des Verriegelungselements 24 mit der Hub-/Kippeinrichtung 7 verbunden und kann im Folgenden angehoben und in den Einfülltrichter 3 eingekippt werden.

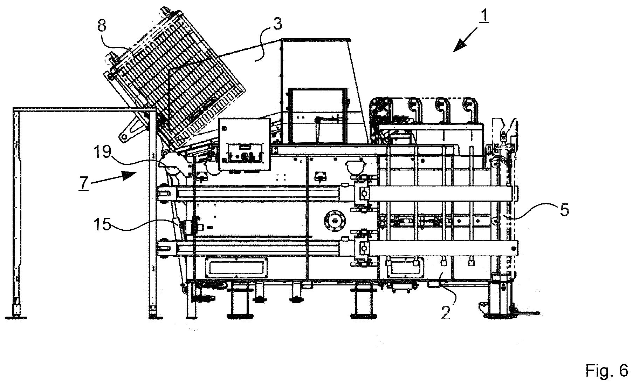

Dies ist in Figur 6 gezeigt, in welcher das Material aus dem Sammelbehälter 8 in den Einfülltrichter 3 entleert worden ist. Mithilfe des Förderbands 4 wird in dieser Position das Material in Richtung der Mitte des Pressengehäuses 2 gebracht und fällt dort in den Einfüllraum beziehungsweise den Pressraum ein, nach dem Verpressen kann über die Tür 5 der fertig verpresste und mit einer Umreifungseinrichtung umreiften Ballen entnommen werden.

Vorstehend beschrieben ist somit eine Ballenpresse, welche unter Beibehaltung der üblichen Kapazitäten eine möglichst kompakte Bauweise aufweist und möglichst geringe Raumanforderungen stellt.

### BEZUGSZEICHENLISTE

- 1: Ballenpresse
- 2: Pressengehäuse
- 3: Einfülltrichter
- 4: Förderband
- 5: Tür
- 6: Presszylinder
- 7: Hub-/Kippeinrichtung
- 8: Sammelbehälter
- 9: Halteelement
- 10: Stützrahmen
- 11: Stützplatte
- 12: Vorsprung
- 13: Stütze
- 14: Rollelement
- 15: Hydraulikzylinder
- 16: Kulisse
- 17: senkrechter Kulissenabschnitt
- 18: abgewinkelter Kulissenabschnitt
- 19: Drehaufnahme
- 20: Kulissenstein
- 21: Führungselement
- 22: Führungskontur
- 23: Einschub
- 24: Verriegelungselement
- 25: Drehachse
- 26: Aktuator
- 27: Riegelstift
- 28: Feder

## Patentansprüche

1. Ballenpresse mit einem Pressengehäuse (2), welches einen Einfüllraum zur Aufnahme von zu verpressendem Material und einen Pressraum zum Verpressen des Materials mithilfe eines horizontal verfahrbaren Pressstempels umgibt und eine Hub-/Kippeinrichtung (7) zur Entleerung eines Sammelbehälters (8) in einen mit dem Einfüllraum verbundenen Einfülltrichter (3) aufweist,
**dadurch gekennzeichnet, dass** die Hub-/Kippeinrichtung (7) ein Halteelement (9) umfasst, welches Mittel zur horizontalen Festlegung und Mittel zur vertikalen Festlegung des Sammelbehälters (8), sowie wenigstens einen mit dem Halteelement (9) verbundenen Kulissenstein (20) aufweist, welcher entlang wenigstens einer dem Pressengehäuse (2) zugeordneten Kulisse (16) zwangsgeführt ist, wobei an einer oberen Endlage der wenigstens einen Kulisse (16) eine Drehaufnahme (19) gebildet ist.

2. Ballenpresse gemäß Anspruch 1, **dadurch gekennzeichnet, dass** das Halteelement (9) mithilfe eines Hubelements, vorzugsweise eines Hydraulikzylinders (15), welcher zwischen dem Halteelement (9) und dem Pressengehäuse (2) angeordnet ist, entlang der Kulisse (16) verschiebbar ist.

3. Ballenpresse gemäß einem der Ansprüche 1 oder 2, **dadurch gekennzeichnet, dass** das Halteelement (9) mithilfe des Hubelements in der Endlage des Kulissensteins (20) in der Drehaufnahme (19) schwenkbar ist.

4. Ballenpresse gemäß Anspruch 3, **dadurch gekennzeichnet, dass** die Drehaufnahme (19) als Gehäuse zur Aufnahme eines mit dem Kulissenstein (20) verbundenen Führungselements (21) gebildet ist, wobei der Kulissenstein (20) in seiner Endlage in dem Inneren des Gehäuses aufgenommen ist.

5. Ballenpresse gemäß einem der vorhergehenden Ansprüche, **dadurch gekennzeichnet, dass** die Kulisse (16) einen senkrechten Kulissenabschnitt (17) und einen abgewinkelten Kulissenabschnitt (18) aufweist, wobei der abgewinkelte Kulissenabschnitt (18) in die Endlage des Kulissensteins (20) mündet.

6. Ballenpresse gemäß Anspruch 5, **dadurch gekennzeichnet, dass** das Halteelement (9) wenigstens eine Stütze (13), vorzugsweise zwei parallele Stützen (13), mit einem endständigen Rollelement (13) aufweist, wobei das Rollelement (14) entlang einer Führungskontur (22) des Pressengehäuses (2) verfahrbar ist und die Führungskontur (22) in Abschnitte unterteilt ist, welche mit den Abschnitten der Kulisse (16) korrespondieren und parallel zu diesen verlaufen.

7. Ballenpresse gemäß einem der vorhergehenden Ansprüche, **dadurch gekennzeichnet, dass** dem Halteelement (9) als Mittel zur vertikalen Festlegung des Sammelbehälters (8) wenigstens ein, vorzugsweise quaderförmiger, Vorsprung (12) zum Eingriff in eine seitliche U-Schiene des Sammelbehälters angeformt oder zugeordnet ist.

8. Ballenpresse gemäß einem der vorhergehenden Ansprüche, **dadurch gekennzeichnet, dass** dem Halteelement (9) als Mittel zur horizontalen Festlegung des Sammelbehälters (8) einerseits wenigstens ein dreiseitig geschlossener Einschub (23) und andererseits ein dem Einschub (23) gegenüberliegendes, lösbares Verriegelungselement (24) zugeordnet sind.

9. Ballenpresse gemäß einem der vorhergehenden Ansprüche, **dadurch gekennzeichnet, dass** das Verriegelungselement (24) um eine Drehachse (25) verschwenkbar ist, wobei dem Verriegelungselement (24) ein kulissengeführter Riegelstift (27) zugeordnet ist, welcher mithilfe eines Aktuators (26) von einer Verschlussposition in eine Öffnungsposition beweglich ist.

10. Ballenpresse gemäß Anspruch 9, **dadurch gekennzeichnet, dass** das Verriegelungselement (24) durch Verschwenken um die Drehachse (25) verriegelbar und der Riegelstift (27) im Zuge der Verriegelung aufgrund einer Federvorspannung aus der Öffnungsposition in die Verschlussposition beweglich ist.

11. Ballenpresse gemäß einem der vorhergehenden Ansprüche, **dadurch gekennzeichnet, dass** das Pressengehäuse (2) in dem Einfülltrichter (3) eine Fördervorrichtung, vorzugsweise ein Förderband (4), aufweist.

12. Ballenpresse gemäß einem der vorhergehenden Ansprüche, **dadurch gekennzeichnet, dass** der Pressstempel in dem Pressengehäuse (2) mithilfe von seitlich am Pressengehäuse (2) ziehend angeordneten Presszylindern (6) beweglich ist.

13. Ballenpresse gemäß einem der vorhergehenden Ansprüche, **dadurch gekennzeichnet, dass** eine Verpressung mithilfe des Pressstempels gegen eine Tür (5) des Pressengehäuses (2) erfolgt, welche vorzugsweise der Hub-/Kippeinrichtung (7) gegenüberliegt.
